Europäisches Patentamt

European Patent Office

Office européen des brevets

(19)

(11) **EP 0 860 001 B1**

(12) **FASCICULE DE BREVET EUROPEEN**

(45) Date de publication et mention
de la délivrance du brevet:
**08.09.1999 Bulletin 1999/36**

(21) Numéro de dépôt: **96934238.5**

(22) Date de dépôt: **04.11.1996**

(51) Int Cl.⁶: **G08G 1/16**, G08G 1/0967

(86) Numéro de dépôt international:
**PCT/BE96/00116**

(87) Numéro de publication internationale:
**WO 97/17686 (15.05.1997 Gazette 1997/21)**

(54) **DISPOSITIF DE SURVEILLANCE ROUTIERE**

STRASSENÜBERWACHUNGSVORRICHTUNG

ROAD MONITORING DEVICE

(84) Etats contractants désignés:
**AT BE CH DE ES FR GB IT LI NL SE**

(30) Priorité: **06.11.1995 BE 9500904**
**26.08.1996 BE 9600718**

(43) Date de publication de la demande:
**26.08.1998 Bulletin 1998/35**

(73) Titulaire: **Cuvelier, Michel**
**4000 Liège (BE)**

(72) Inventeur: **Cuvelier, Michel**
**4000 Liège (BE)**

(56) Documents cités:
**EP-A- 0 451 117**          **WO-A-87/02164**
**WO-A-90/13103**          **FR-A- 2 213 549**
**FR-A- 2 580 097**          **US-A- 3 739 179**
**US-A- 4 348 652**

## Description

La présente invention concerne des dispositifs de surveillance destinés à améliorer la sécurité et le confort dans la conduite d'un véhicule sans faire appel à une nouvelle infrastructure importante du réseau routier.

Le traffic sur les routes est emcombré et souvent dangereux un simple manque d'attention pendant quelques fractions de seconde peut causer de graves accidents. Un but de l'invention est de fournir des dispositifs de surveillance, qui aident à attirer l'attention d'un conducteur sur des situations dangereuses.

Des solutions récentes proposées pour assurer une meilleure sécurité routière font appel généralement à une modification importante de l'infrastructure du réseau routier nécessitant des sources extérieures d'énergie (émetteurs hertziens, caméras, etc...). Des accidents dus à l'assoupissement ou à la distraction d'un conducteur sont toujours fréquents faute de moyens de surveillance efficaces. Des procédés en cours de développement basés sur l'utilisation de caméras pour observer l'attitude du conducteur ne sont pas à même de déceler une distraction passagère et la rapidité d'intervention n'est pas toujours évidente.

Un brevet antérieur portant la référence US-A-4 348 652 propose un dispositif embarqué pour surveiller un débordement incontrôlé de trajectoires d'un véhicule routier circulant entre les lignes de marquage centrales et latérales d'une chaussée.

Le dispositif tel qu'il est décrit ne prend en compte que des lignes de marquage centrales et latérales ayant une largeur bien spécifique (entre 4 pouces et 5 pouces) dans une approche tangentielle du véhicule, ce qui nécessite pour son application une modification importante du marquage sur le réseau routier.

Cette importante adaptation du réseau routier ne conduirait en définitive qu'à obtenir une surveillance partielle de la trajectoire du véhicule ce qui limite toutes possibilités de développement pratique du procédé.

La présente invention est caractérisée par un large éventail de paramètres de la circulation contrôlés au moyen d'un système embarqué à bord d'un véhicule ne nécessitant pas le besoin d'une source extérieure d'énergie.

Elle utilise une relation permanente qui existe entre ledit véhicule et une surface de roulement sur laquelle il avance, pour transmettre à son bord des indications concernant la position du véhicule sur la chaussée, la présence de corps étrangers sur la bande de roulement ainsi que les principaux éléments de la signalisation rencontrée sur le parcours.

Lorsqu'un conducteur amène son véhicule dans une situation non conforme aux paramètres enregistrés il en est averti par une signalisation à bord ainsi que par une alarme éventuelle l'invitant à réagir pour éviter un accident potentiel.

Selon l'invention les lignes du marquage actuel des routes et des autoroutes ainsi que la nature généralement herbeuse, caillouteuse ou sablonneuse des bords de route, la constitution des terre-pleins, les barrières de sécurité et les accotements sont différents éléments dont au moins l'un d'entre eux est nécessaire pour établir un contrôle de la trajectoire du véhicule et/ou pour détecter l'approche d'une situation dangereuse ou certains excès de vitesse. Des corps étrangers tels que plaques de neige, de verglas ou boue créant une discontinuité dans le revêtement de la chaussée seront également perçus par un véhicule en mouvement équipé d'un dispositif de surveillance selon l'invention.

Un dispositif de surveillance routière selon l'invention comporte un ensemble de capteurs aptes à détecter des changements dans la surface de roulement.

De préférence cet ensemble de capteurs est constitué d'émetteurs aptes à émettre des ondes se réfléchissant sur la surface de roulement et de récepteurs sensibles aux ondes réfléchies sur cette même surface de roulement. Les capteurs sont placés judicieusement en regard de la chaussée et réagissent aux variations du pouvoir réfléchissant des surfaces visées dans la gamme de leur sensibilité. Leur fonctionnement n'est pas perturbé par la lumière ambiante ni par la pluie.

Pour éviter les projections de toute nature en provenance de la chaussée il est plus avantageux de placer les capteurs à l'avant du véhicule à une hauteur suffisante pour profiter de l'abri de la carrosserie. Toutefois il n'est pas exclu de placer les capteurs dans une autre zone en les protégeant adéquatement. Il est également possible de placer les capteurs sur les rétroviseurs extérieurs du véhicule ou dans les pare-chocs toujours en direction de la surface de roulement. Pour tenir compte des barrières de sécurité (métalliques ou en béton) il est encore souhaitable de prévoir également des capteurs dont l'axe de visée est dirigé en direction de ces barrières.

Une lunette de visée avec écrans réflecteurs éventuels permet de définir ou d'accroître la zone utile des capteurs. Ces écrans solidaires ou non des capteurs dirigent les ondes émises et les orientent après une première réflection sur la surface de roulement vers les récepteurs aussi bien dans le sens d'avancement que dans le sens transversal.

On peut utiliser des capteurs de nature différente sur un même véhicule. Toutefois il faut respecter la correspondance entre le type de capteurs et la nature des lignes que ce capteur est sensé observer. Le seuil d'activation de ces capteurs peut être piloté par l'un ou plusieurs d'entre eux en comparant le pouvoir réfléchissant moyen de la surface de roulement aux réflections sur les discontinuités apparaissant sur cette surface (mesure différentielle). De cette manière il est tenu compte des conditions climatiques dans les mesures observées ainsi que de la nature du revêtement (asphalte, béton,..).

Une augmentation du nombre des capteurs avec écrans éventuels réfléchissants assure un repérage de lignes discontinues avec un angle d'approche de la trajectoire du véhicule plus important grâce à un contrôle sur une plus grande partie de la largeur du véhicule. Le passage du véhicule sur une de ces lignes sera alors perçu au moins par l'un d'entre eux.

Le placement des capteurs à l'extérieur du gabari du véhicule par exemple sur les rétroviseurs extérieurs assure une détection plus rapide des lignes axiales de séparation des bandes de roulement et des bordures de route.

On peut rendre hermétique l'espace contenu dans la lunette de visée ou y placer un corps transparent pour éviter une perturbation éventuelle de la propagation oes ondes par la présence d'un brouillard épais ou d'une fumée intempestive.

Lorsque le véhicule s'approche des lignes de marquage ou les traverse ou lorsque le véhicule s'approche des barrières de sécurité ou lorsque le revêtement présente une discontinuité, les capteurs correspondants réagissent et envoient leurs signaux dans une unité électronique de commande et de contrôle. Celle-ci commande à son tour une unité d'identification des paramètres enregistés, enclenche un système d'alarme si nécessaire et des fonctions d'automatisme.

L'ordre et l'origine dans lesquels les impulsions des capteurs arrivent à l'unité de commande et de contrôle, le nombre d'impulsions, le temps d'écoulement entre deux séries d'impulsions successives sont autant de paramètres qui déterminent avec précision le contenu du message à transmettre à un système de signalisation.

Le conducteur perçoit les messages par des signaux lumineux, sonores ou des messages écrits ou vocaux.

Un système d'alarme est capable d'identifier les défauts enregistrés tout en produisant des signaux d'alarme pouvant être de multiples natures (lumineux, sonores, vocaux, écrits et sensitifs).

La coupure des circuits d'alarme se fait de préférence manuellement pour obliger le conducteur à réagir.

Elle peut être automatisée dans certains cas, la durée des signaux d'alarme étant limitée à quelques secondes.

Le niveau sonore de l'alarme peut être réglé par le conducteur. Toutefois pour des fautes graves, l'alarme sera de niveau élevé et durable.

Lorsqu'un conducteur veut passer d'une bande de roulement à l'autre, il pourra éviter l'enclenchement du système de signalisation en actionnant au préalable son clignoteur.

Pour contrôler un excès de vitesse dans une localité on peut grâce aux lignes transversales et inscriptions diverses déjà en place signifier au conducteur le dépassement du maximum de vitesse autorisée.

Il suffit pour ce faire d'établir une relation entre la vitesse du véhicule et la possibilité d'enclenchement du système d'alarme. Le conducteur peut choisir lui-même le niveau de vitesse maximum à contrôler - par exemple 50 km/h + 10%. Toutefois il est possible de mesurer automatiquement la valeur de cette vitesse maximum à l'endroit précis où elle commence au moyen de lignes supplémentaires disposées à cet endroit. Toutes les inscriptions transversales qui suivent peuvent être utilisées pour établir le contrôle de la vitesse du véhicule.

En asservissant ainsi le système d'alarme à la vitesse du véhicule on peut également éviter les réactions intempestives de l'alarme même dans une agglomération en ne dépassant pas la limite de vitesse fixée (manuellement ou automatiquement).

L'enclenchement du système d'alarme au passage de n'importe quelle ligne ou inscription signifiera au conducteur qu'il y a dépassement de la vitesse autorisée ou de la vitesse limite prédéterminée. De préférence la perception prolongée des signaux des capteurs par arrêt sur une ligne blanche ou lorsque le conducteur roule sur une route enneigée conduit à une déconnection automatique du système d'alarme.

Le fonctionnement correct de chacun des capteurs est lui-même surveillé en permanence et un défaut éventuel de l'un d'entre eux sera signalé à bord. Pour ce faire on mesure par exemple le niveau des ondes perçues par les récepteurs de chacun des capteurs. L'absence prolongée de variations des ondes réfléchies pour l'un ou l'autre des capteurs signifiera que celui-ci n'est pas opérationel.

En cas de blocage prolongé de l'organe de coupure du circuit d'alarme, un système d'antiblocage rétablit automatiquement le fonctionnement normal de l'alarme. Pour ce faire on mesure par exemple le temps de fermeture de l'organe de coupure (un bouton poussoir...). Si ce temps dépasse une certaine valeur son action sera éliminée automatiquement et ne pourra être rétablie qu'après déblocage du cicuit de coupure.

Il est possible grâce à une combinaison entre le nombre et le positionnement des capteurs sur le véhicule et des ensembles de lignes judicieusement disposées sur la chaussée de déterminer un grand nombre de messages spécifiques transmissibles au conducteur.

De préférence le circuit électronique commande aussi des moyens pour enclencher des fonctions d'automatisme du véhicule en mouvement.

L'ajoute aux endroits dangereux de fragments de lignes (points ronds, section rectangulaire ou de formes diverses) régulièrement espacés sur la bande de roulement peut définir une trajectoire idéale assurant au conducteur plus d'espace et de temps pour réagir en cas de déportement de son véhicule. En ajoutant une ligne transversale à l'endroit d'une signalisation importante on attire l'attention du conducteur sur la présence de cette signalisation par l'apparition d'un signal orange et d'un bip sonore de courte durée par exemple.

Un marquage supplémentaire constitué de lignes de nature et de forme appropriées disposées d'une manière précise sur la chaussée soit en travers de celle-ci soit le long des marquages actuels augmente la précision et le nombre d'informations transmissibles au véhicule (trajectoire plus précise aux endroits dangereux, sens unique, limitation de vitesse, approche d'un carrefour ou d'un virage dangereux, etc...).
Ces informations sont utilisées non seulement pour être transmises au conducteur et l'avertir d'une faute de conduite éventuelle mais aussi pour opérer certaines corrections automatiques comme le ralentissement du véhicule, la mise en marche des clignoteurs, l'allumage des phares avant l'entrée dans un tunnel...

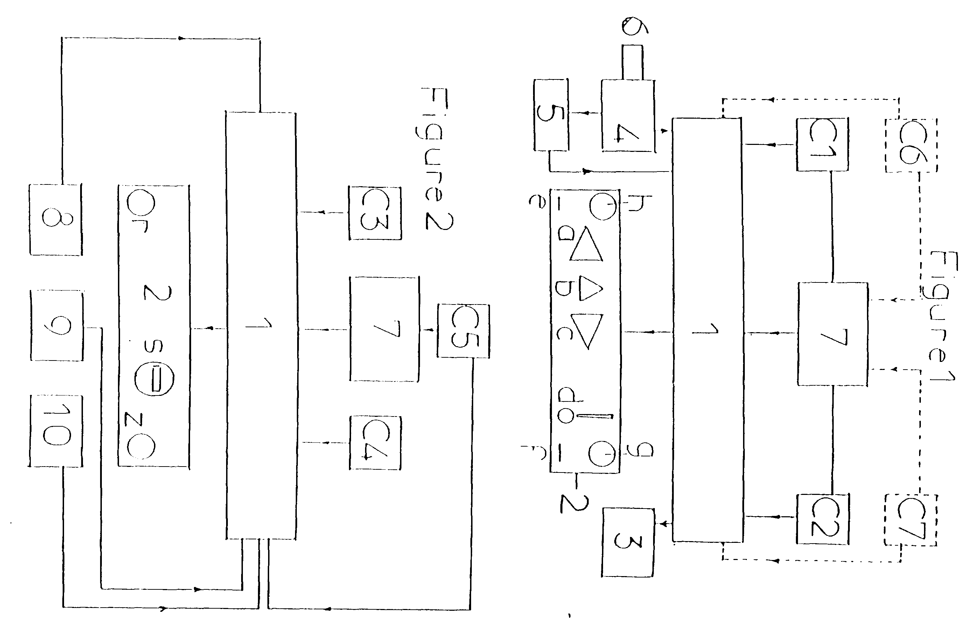

D'autres particularités ou avantages de l'invention seront décrits dans des modes de réalisation particuliers, référence étant faite aux dessins annexés, dans lesquels la figure 1 représente un schéma bloc d'un système de base embarqué,

la figure 2 représente un schéma bloc d'un système embarqué plus efficient,
la figure 3 décrit différentes positions des capteurs,
la figure 4 décrit la position d'un véhicule abordant des lignes discontinues,
la figure 5 caractérise un marquage à deux lignes transversales sur une entrée d'autoroute à sens unique, et sur une route interdisant le dépassement,
la figure 6 caractérise un marquage à deux lignes parallèles pour surveiller la vitesse d'un véhicule,
la figure 7 caractérise un marquage utilisant trois couples de lignes parallèles pour surveiller la vitesse d'un véhicule à l'approche d'un carrefour avec STOP,
la figure 8 caractérise un marquage à deux lignes pour l'automatisation de l'allumage des phares à l'entrée d'un tunnel,
la figure 9 caractérise un marquage supplémentaire d'une ligne associée à un passage piétonnié pour éviter une réaction du système d'alarme en le traversant, et
la figure 10 caractérise la position des capteurs en regard des barrières de sécurité.

Exemple 1 :

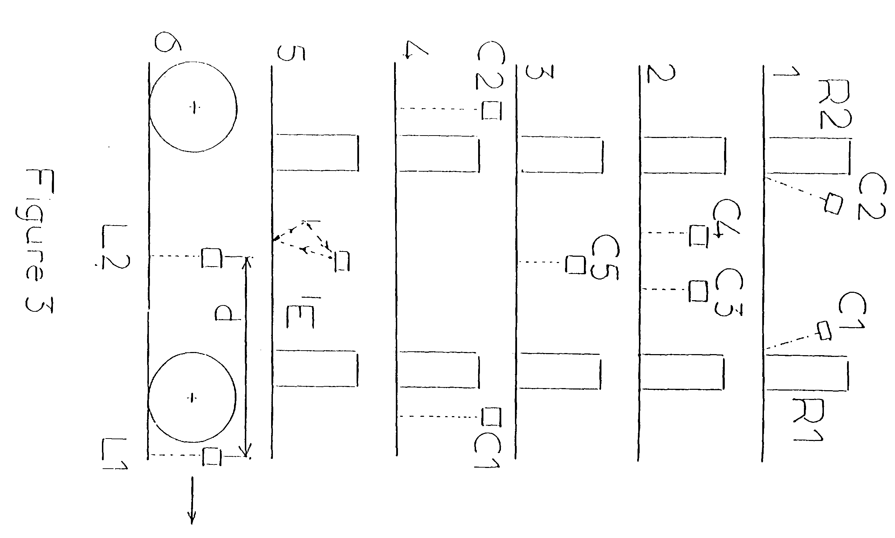

Deux capteurs C1, C2 sont disposés l'un dans le coin avant gauche et l'autre dans le coin avant droit (figure 1). Les axes de visée sont légèrement inclinés vers l'extérieur des flancs du véhicule (figure 3 - dessin 1). Sur la figure 3 les dessins 1 à 5 représentent le profil des roues directrices R1, R2 posées sur le sol et le positionnement des capteurs C1, C2; C3, C4; C5 vus de l'avant (abrités par la carrosserie ou le pare-chocs avant). La roue droite R1 représentée sur les dessins 1 à 5 de la figure 3 est donc située à l'avant gauche du véhicule. Le seuil de sensibilité de ces capteurs C1, C2 est réglé sur la couleur d'une ligne claire de la chaussée (blanche ou jaune).
Ce réglage compte tenu des longueurs d'ondes choisies dans l'infrarouge permet également une bonne sensibilisation sur le sable ou sur l'herbe ou sur les plaques de neioe ou de verglas....
Lorsque le véhicule s'approche ou traverse les lignes encadrant sa bande de roulement il y a une détection de ces lignes par les capteurs C1, C2. Ce sera d'abord le capteur C1 qui détectera un déportement vers la gauche ou le capteur C2 un déportement vers la droite.
Les signaux de ces capteurs C1, C2 seront transmis dans le circuit électronique 1 qui commandera le système de signalisation 2 à bord ainsi que le système d'alarme 3.
Le système de signalisation 2 tel que décrit à la figure 1, comporte deux flèches rouges a, c, une flèche b, un point d'exclamation d, des voyants rouges e, f aptes à signaler un fonctionnement incorrect des capteurs C1, C2, un bouton poussoir h pour la mise en marche du système et un bouton g pour régler le volume de l'alarme sonore du système d'alarme 3. Les flèches rouges a, c indiquent le sens du déportement du véhicule. Les signaux sonores du système d'alarme 3 indiquent également le sens de ce déportement en étant plus grave à gauche et plus aigu à droite. La flèche verte b indique un bon centrage du véhicule sur sa bande de roulement ainsi que la mise en fonction du système de surveillance routière.
A l'apparition des signaux d'alarme du système d'alarme 3, le conducteur se rend compte immédiatement qu'il a quitté la bande de roulement. Si son intention était de changer volontairement de bande de roulement, il pourra en enclenchant son clignoteur au préalable éviter le fonctionnement des signaux d'alarme. Si son intention est de revenir sur sa trajectoire initiale il recentre son véhicule et coupe l'alarme en actionnant le bouton poussoir 6 fixé sur un levier 4 du clignoteur.
L'apparition d'une ligne transversale ou d'une plaque de neige ou d'une autre discontinuité opère l'activation simultanée de C1 et de C2. Cette fermeture simultanée perçue par le circuit électronique illumine d'une couleur orange un signal danger sous forme d'un point d'exclamation d et fait entendre un bip sonore de courte durée tout en empêchant le fonctionnement du système de surveillance de la trajectoire puisqu'il n'est pas concerné.

Le conducteur est ainsi averti qu'il y a des inscriptions au sol ou une discontinuité dans la surface de roulement.
Le blocage éventuel du bouton poussoir 6 est surveillé par le dispositif d'antiblocage 5 qui rétablit le fonctionnement du système d'alarme 3 même en position de coupure prolongée de celui-ci. La fonction du bouton poussoir 6 n'est rétablie qu'après déblocage de celui-ci.
Le fonctionnement correct de C1 et C2 est lui-même contrôlé par une unité de contrôle 7 qui surveille la permanence des variations des ondes réfléchies pour chacun des capteurs C1, C2 signalant par des voyants rouges e, f un blocage ou une panne éventuelle de ceux-ci (absence de variations).
La moyenne des ondes réfléchies par les capteurs correspond au pouvoir réfléchissant moyen du revêtement. Toute apparition d'une discontinuité dans ce revêtement donne lieu à une variation importante du coéfficient de réflection par rapport à cette valeur moyenne et sera enregistrée comme un signal utile par le circuit électronique 1. Cette mesure différentielle n'est pas indispensable au fonctionnement du système de surveillance routière.

Le volume de l'alarme sonore du système d'alarme 3 est réglable par le bouton g avec une valeur minimum en-dessous de laquelle il n'est pas permis de descendre pour rester en sécurité. La mise en marche du dispositif de surveillance routière est assurée par le bouton poussoir h ou simplement lors de la mise en route du véhicule pour assurer un fonctionnement permanent de cet organe de sécurité.

Exemple 2 :

Le dispositif de surveillance routière décrit à la figure 2 reprend les mêmes éléments que ceux de l'exemple 1 auxquels viennent s'ajouter des éléments complémentaires dans le but d'obtenir un fonctionnement plus étendu du dispositif de surveillance routière. Une unité de mesure de vitesse 9 mesure la vitesse du véhicule dont la valeur est introduite dans le circuit éléctronique 1.

Le conducteur dispose sur le système de signalisation 2 d'un bouton rotatif ou à impulsion z lui permettant de déterminer la valeur de la vitesse à partir de laquelle le système d'alarme 3 peut s'enclencher. Cette valeur étant comprise entre 0 km/h et 75 km/h par exemple.

Pour pouvoir détecter des lignes discontinues en les abordant avec un angle de pénétration q (figure 4) plus important, il convient d'ajouter des capteurs, C3 et C4 par exemple (figure 2 et figure 3 (2)) qui avec C1, C2 couvrent quasi toute la largeur du véhicule. L'utilisation d'écrans réflecteurs E permet d'arriver au même résultat avec moins de capteurs (figure 3 (5)), parce que les écrans réflecteurs permettent d'accroître la zone utile des capteurs.

Le capteur C5 (figure 2 et figure 3 (3)) est facultatif. Il est utilisé pour mesurer le pouvoir de réflection moyen du revêtement, cette valeur étant prise comme référence pour déterminer le seuil d'activation des capteurs C1, C2; C3, C4.

Il peut également remplacer les capteurs C3, C4 tout en pilotant les capteurs C1 et C2.

Certaines demandes de constructeur automobile ont été faites de pouvoir distinguer les lignes continues des lignes discontinues laissant le choix au conducteur de ne pas faire intervenir les lignes discontinues dans le contrôle de la trajectoire. Pour ce faire l'unité électronique mesure le temps d'activation des capteurs de C1, C2; C3, C4. Si on indique par a (figure 4) la longeur maximum d'un segment discontinu et par V la vitesse du véhicule on obtient un temps maximum d'activation continue des capteurs C1, C2; C3, C4 voisin de a/V secondes.

Lorsque le véhicule traverse une ligne continue, le temps d'activation des capteurs C1, C2; C3, C4 sera bien supérieur à cette valeur. L'unité électronique 1 ne permettra l'enclenchement du système d'alarme 3 que pour des temps d'activation supérieurs à a/V correspondant au passage sur les lignes continues seulement.

On peut également faire la distinction entre les lignes continues et discontinues sans faire intervenir la vitesse du véhicule. Une première rangée de capteurs L1 est placée à l'avant du véhicule. Une seconde rangée de capteurs L2 est disposée en L2 (figure 3 (6)). La distance d séparant L1 de L2 est déterminée par la relation $d = \frac{a+b}{2}$, a étant la longueur moyenne d'un segment de ligne discontinue et b étant la distance moyenne séparant deux segments discontinus successifs. Le système d'alarme 3 contrôlant la trajectoire du véhicule ne pourra réagir que s'il y a simultanéité d'activation d'au moins un capteur de la rangée de capteurs L1 et d'un capteur de la rangée de capteurs L2 . Cette simultanéité n'apparaîtra qu'au passage sur une ligne continue.

Dans un cas comme dans l'autre, le conducteur pourra choisir en pressant sur un bouton r (figure 2), le mode de surveillance qu'il souhaite obtenir.

Exemple 3 :

Pour distinguer les lignes existantes des lignes nouvelles spécifiques à l'invention, on peut utiliser des lignes dont la surface possède un pouvoir réfléchissant supérieur (par exemple surface métallisée etc...) ou absorbant (par exemple surface caoutchoutée). L'usage d'une ligne de ce type ou de deux lignes couplées permet d'accroître les possibilités de l'alarme routière comme c'est décrit dans les exemples suivants.

Dans cet exemple comme dans les exemples suivants, le véhicule sera équipé de deux capteurs C6, C7 placés à l'avant du véhicule respectivement dans le coin gauche et dans le coin droit (figure 1, dessin en pointillé).

Le seuil d'activation ou de désactivation de ces capteurs C6, C7 est réglé sur les lignes nouvelles plus réfléchissantes ou plus absorbantes. Ils ne réagiront donc pas aux autres lignes déjà en place.

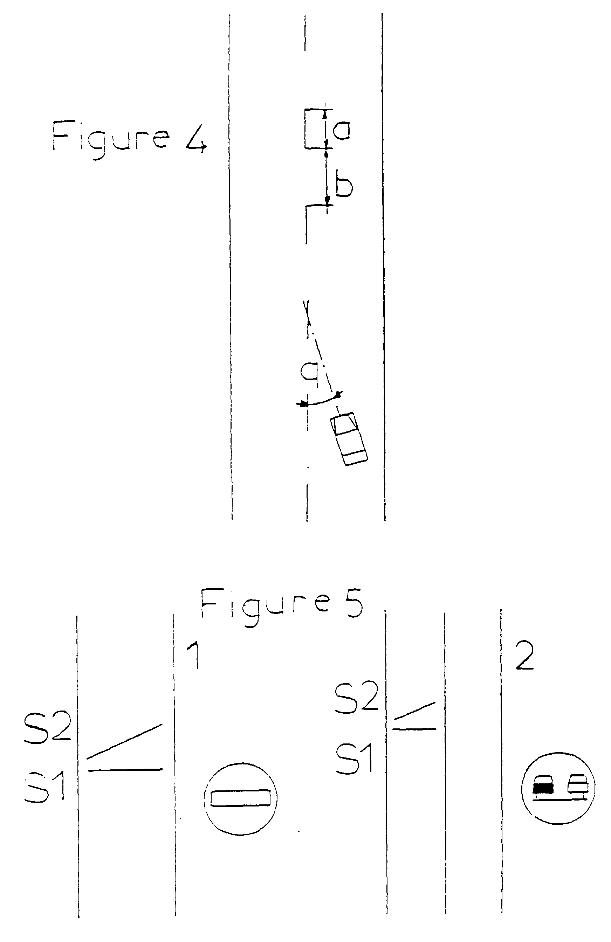

La figure 5 montre la disposition des lignes S1 et S2 plus réfléchissantes sur une bande de roulement pour détecter un sens interdit (1) (entrée d'autoroute par exemple) et une interdiction de doubler (2) sur une route à double voie. Dans le sens interdit le véhicule rencontre d'abord la ligne S1 qui active simultanément C6 et C7. Ensuite les capteurs sont désactivés brièvement puis au passage sur la ligne oblique S2 il y a activation d'abord de C6 seul suivi de C7. Ce cycle d'impulsions est utilisé par le circuit électronique 1 pour détecter le sens unique et enclencher l'alarme correspondante du système d'alarme 3. Dans le sens contraire le passage sur la ligne S2 activera d'abord C6 puis C7 et ensuite au moment du passage sur la ligne S1 il y aura activation simultanée de C6 et de C7. Ce cycle d'impulsions ne permet pas l'enclenchement du système d'alarme 3.

La figure 5 (2) montre la même disposition des segments S1 et S2 sur une route à double voie avec interdiction de dépassement sur la bande de gauche. Le cycle d'activation des capteurs C6, C7 est le même que pour le sens unique si le véhicule emprunte la bande de roulement interdite.

Exemple 4 :

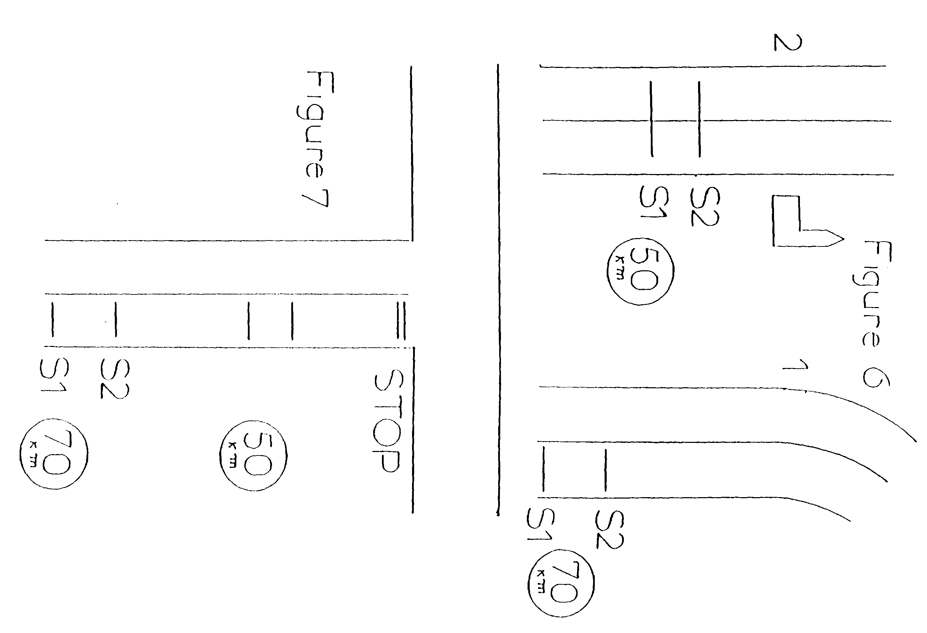

La figure 6 montre la position relative des deux lignes S1 et S2 pour effectuer le contrôle de la vitesse du véhicule à l'approche d'un virage dangereux (1) et à l'approche d'une localité (2).
La figure 7 caractérise la position de 3 couples de lignes à l'approche d'un carrefour avec arrêt obligatoire (STOP).
Dans tous les cas de figures, les lignes S1 et S2 sont placées perpendiculairement à l'axe de la route. La distance entre les lignes S1 et S2 est déterminée par la valeur de la vitesse maximum autorisée à cet endroit. Elle est calculée par exemple sur la distance parcourue à cette vitesse en 4 secondes. Pour une vitesse limitée à 50 km/h cette distance sera donc voisine de 56 mètres.
Le véhicule en rencontrant la ligne S1 (placée à proximité du panneau indicateur de limitation de vitesse) enregistre la simultanéité des impulsions des capteurs C6 et C7 au temps T1. Ce passage est signalé au conducteur par le voyant orange d (figure 1) et le bip sonore.
Ce voyant d restera allumé pendant 4 secondes. Si le passage sur la ligne S2 a lieu au Temps T2 tel que T2 - T1 est inférieur à 4 secondes c'est que le véhicule a dépassé la limite de vitesse autorisée et le voyant orange d passera au rouge avec apparition de l'alarme correspondante. Par contre si le véhicule passe la ligne S2 après 4 secondes et après l'extinction du voyant orange d, il n'y aura aucune réaction du système d'alarme 3 puisque le conducteur n'est pas en défaut. En plus par la mesure de la distance parcourue entre T2 et T1 par le véhicule grâce à une unité de mesure de la distance parcourue 10 (figure 2) le circuit électronique 1 enregistre la valeur de la limite de vitesse imposée. Cette valeur étant connue il est facile de réduire automatiquement grâce à une unité d'automatisation 8 (figure 2) la vitesse du véhicule en utilisant par exemple le frein moteur par action sur l'alimentation en carburant du moteur.

Exemple 5 :

A la figure 7 il est montré comment on peut amener un véhicule à une vitesse pratiquement nulle en utilisant 3 couples de deux segments dont la distance de séparation est de plus en plus rapprochée :

    à 70 km/h elle sera de 78 mètres
    à 50 km/h elle sera de 56 mètres
    à 1 km/h elle sera de 1,1 mètre.

Exemple 6 :

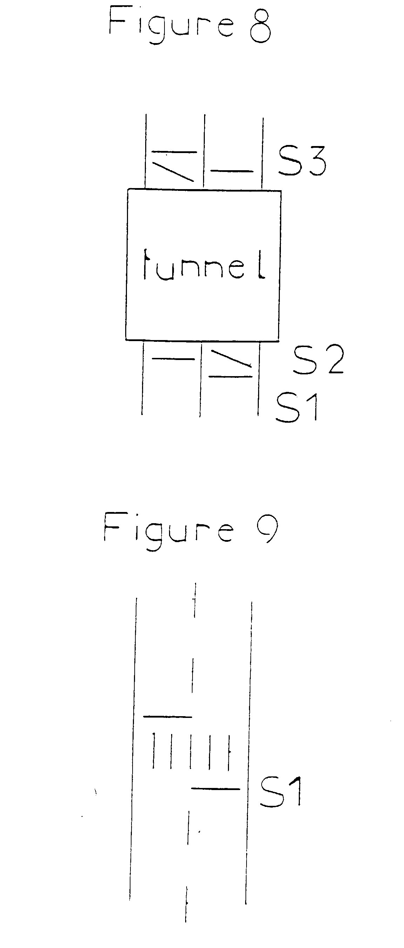

La figure 8 montre la disposition des lignes S1 et S2 et S3 à l'entrée et à la sortie d'un tunnel pour automatiser grâce à une unité d'automatisation 8 l'enclenchement des phares et avertir le conducteur par l'apparition du signal orange d figure 1 et d'un bip sonore que les phares sont allumés à la sortie de celui-ci.
La ligne S1 perpendiculaire à l'axe de la route suivi de la ligne S2 placée obliquement (à l'inverse du sens interdit) détermine le cycle d'activation des capteurs C6 et C7 suivants : activation simultanée de C6 et C7, désactivation puis activation de C7 seul suivi de C6. Ce cycle peut être utilisé par le circuit électronique 1 pour commander grâce une unité d'automatisation 8 (figure 2) l'allumage automatique des phares du véhicule.
La ligne S3 placée perpendiculairement à l'axe de la route à la sortie du tunnel activera simultanément les capteurs C6 et C7 entrainant l'allumage du signal orange et du bip sonore pour attirer l'attention du conducteur sur le fonctionnement des phares de son véhicule. L'enclenchement des capteurs C6 et C7 prévaut sur les signaux des autres capteurs C1, C2; C3, C4 De cette manière on peut maîtriser l'ensemble des inscriptions au sol en plaçant en amont de celles-ci une ligne S1 lorsqu' on ne souhaite pas qu'elles soient perçues comme message utile.

Exemple 7 :

La figure 9 montre comment on peut combiner des lignes traditionnelles avec des lignes nouvelles à haut pouvoir réfléchissant pour éviter la perception de certaines lignes inutiles.
Il s'agit d'un passage piétonnié. La bande de roulement à droite est représentée à droite sur la figure 9 ; une ligne continue S1 active les capteurs C6, C7 au passage du véhicule dans un sens ou l'autre éliminant pendant 4 secondes la possibilité d'action des autres capteurs C1, C2; C3, C4 sous les lignes du passage piétonnié.

Exemple 8 :

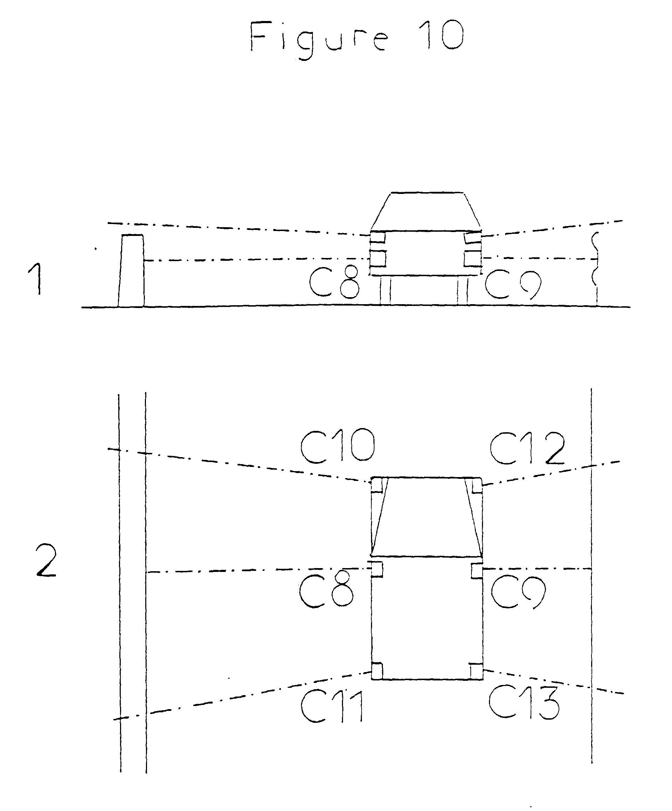

La figure 10 montre comment en utilisant des capteurs C8, C9 dirigés vers les barrières latérales de sécurité on peut détecter une approche excessive du véhicule de ces barrières.
Dans ce cas le seuil d'activation des capteurs C8, C9 sera réglé pour une distance d'approche minimum d'environ un à deux mètres (valeur ajustable) de ces barrières.
Pour distinguer la présence de ces barrières du passage d'un véhicule on peut subordonner l'action de ces capteurs C8, C9 à celle d'autres capteurs C10, C11; C12, C13 (figure 10) dont l'axe de visée se situe de part et d'autre et à un niveau plus élevé que celui des capteurs C8, C9 de manière à rencontrer la surface latérale d'un véhicule d'approche sans atteindre les barrières de sécurité.

L'action du clignoteur peut être utilisée pour libérer les capteurs C8, C9, de cette contrainte afin de signaler à bord la présence éventuelle d'un véhicule dans l'angle mort de la vision d'un conducteur au moment d'une manoeuvre de dépassement.

Des voyants lumineux peuvent être placés par exemple sur les rétroviseurs du véhicule pour identifier la position éventuelle (gauche ou droite) de véhicules dans l'angle mort.

L'application industrielle du dispositif de surveillance routière peut être envisagée dans l'immédiat sans rien changer à l'infrastructure routière en équipant de ce dispositif les véhicules neufs et les véhicules en service (voiture, camion, autocar, etc...). Les véhicules ainsi équipés seront à même de surveiller la trajectoire qu'ils empruntent, certaines limitations de vitesse ainsi que la présence de plaques de neige ou de verglas sur la bande de roulement.

Pour les véhicules neufs on peut prévoir à l'origine les logements des capteurs, les connections, la signalisation sur le tableau de bord, près du volant, ou éventuellement sur le volant lui-même ou sur les rétroviseurs, les fonctions automatiques faisant appel à la mesure de la vitesse du véhicule et à la mesure de la distance parcourue entre deux repères.

En ce qui concerne les véhicules en service, il faut prévoir un boîtier de protection des capteurs, le mode de fixation de ceux-ci sur les différente parties des véhicules ainsi que du système d'alarme et de contrôle qui devra être placé près du conducteur.

L'ajoute de quelques lignes nouvelles de même nature que celles actuellement en service ou de nature distincte (plus absorbante ou plus réfléchissante) sur la surface de roulement permet d'accroître considérablement le champ d'action du système de surveillance routière.

## Revendications

1. Dispositif de surveillance routière embarqué dans un véhicule routier apte à se déplacer sur une surface de roulement, comportant au moins un capteur (C1, C2) orienté vers ladite surface de roulement apte à détecter des changements de cette surface visée pendant l'évolution du véhicule, le ou les capteurs (C1, C2) comportant un ou des émetteurs aptes à émettre des ondes dans un domaine peu perturbé par la lumière ambiante vers ladite surface et un ou des récepteurs captant exclusivement les ondes réfléchies provenant du ou des émetteurs correspondants,

un système de signalisation (2) apte à signaler ces changements de surface et

une unité électronique (1), apte à commander le système de signalisation (2) en raison des informations issues desdits capteurs caractérisé par un réglage initial du seuil de sensibilité desdits capteurs tenant compte des longueurs d'ondes choisies dans l'infra-rouge permettant une sensibilisation sur des corps étrangers tels que le sable, l'herbe, des plaques de neige ou verglas, d'accotements, terre-pleins, barrières de sécurité, etc, ainsi que par une lunette de visée permettant de définir ou d'accroître la zone utile des capteurs (C1, C2).

2. Dispositif de surveillance routière selon la revendication 1, caractérisé en ce que le ou les capteurs (C1, C2) possède un seuil de sensibilité réglable individuellement en fonction de la nature de la surface visée ainsi que de la distance de séparation.

3. Dispositif de surveillance routière selon l'une quelconque des revendications précédentes, caractérisé en ce que le fonctionnement du ou des capteurs (C1, C2) n'est pas perturbé par les conditions d'ambiance extérieure telles que la lumière du jour, la pluie, le brouillard.

4. Dispositif de surveillance routière selon l'une quelconque des revendications précédentes, caractérisé en ce que le ou les capteurs (C1, C2) sont aptes à suivre l'évolution de la surface visée aussi bien dans le sens d'avancement que dans le sens transversal.

5. Dispositif de surveillance routière selon l'une quelconque des revendications précédentes caractérisé en ce qu'il comporte au moins un écran réflecteur (E) apte à orienter les ondes émises et les ondes réfléchies des capteurs.

6. Dispositif de surveillance routière selon l'une quelconque des revendications précédentes, caractérisé en ce que le système de signalisation (2) produit des messages par des signaux lumineux, par des messages sonores, par des messages écrits, par des messages vocaux ou par des messages sensitifs dont la durée d'émission est automatiquement limitée.

7. Dispositif de surveillance routière selon l'une quelconque des revendications précédentes, caractérisé en ce qu'il comporte en plus un système d'alarme (3).

8. Dispositif de surveillance routière selon la revendication 7, caractérisé en ce que le système d'alarme produit des signaux lumineux, des signaux écrits, des signaux vocaux ou des signaux sensitifs dont la durée d'émission est automatiquement limitée.

9. Dispositif de surveillance routière selon l'une quelconque des revendications 7 et 8, caractérisé en ce qu'il comporte un verrouillage automatique temporaire du système d'alarme (3) dès l'enclenchement du clignoteur du véhicule routier.

10. Dispositif de surveillance routière selon la revendication 9, caractérisé en ce qu'il comporte un organe de coupure (6) pour le verrouillage automatique temporaire du système d'alarme (3).

11. Dispositif de surveillance routière selon la revendication 10 caractérisé en ce que l'organe de coupure (6) est muni d'un système antiblocage (5) arrêtant l'action de l'organe de coupure en cas de blocage prolongé de celui-ci.

12. Dispositif de surveillance routière selon l'une quelconque des revendications précédentes caractérisé en ce qu'il comporte une unité de contrôle (7) apte à surveiller le fonctionnement correct des capteurs (C1, C2).

13. Dispositif de surveillance routière selon l'une quelconque des revendications précédentes, caractérisé en ce qu'il comporte un dispositif de coupure du système d'alarme (3) lorsqu'il y a une action prolongée du ou des capteurs (C1, C2).

14. Dispositif de surveillance routière selon l'une quelconque des revendications précédentes, caractérisé en ce qu'il comporte au moins un capteur (C8) apte à détecter la présence des barrières de sécurité.

15. Dispositif de surveillance routière selon la revendication 14 caractérisé en ce qu'il comporte au moins un capteur (C10) apte à détecter la présence de véhicules en approche latérale de manière à faire la distinction entre l'approche d'un véhicule et l'approche d'une barrière de sécurité.

16. Dispositif de surveillance routière selon l'une quelconque des revendications précédentes, caractérisé en ce qu'il comporte plusieurs capteurs (C1... C13) dont le positionnement et le réglage de leur sensibilité de travail permettent d'obtenir des signaux à partir des surfaces visées par chacun d'eux, signaux qui, en les combinant entre eux, donnent les messages utiles recherchés.

17. Dispositif de surveillance routière selon l'une quelconque des revendications précédentes, caractérisé en ce qu'il comporte des moyens pour distinguer à volonté les lignes discontinues des lignes continues du marquage axial des routes.

18. Dispositif de surveillance routière selon l'une quelconque des revendications précédentes caractérisé en ce qu'il comporte des moyens pour enclencher des fonctions d'automatisme dans la conduite du véhicule routier.

19. Dispositif de surveillance routière selon l'une quelconque des revendications précédentes, caractérisé en ce qu'il est fait usage des rétroviseurs extérieurs du véhicule routier pour y placer un ou des capteurs (C1....C13).

20. Dispositif de surveillance routière selon l'une quelconque des revendications précédentes, caractérisé en ce qu'il est fait usage des rétroviseurs extérieurs du véhicule routier pour y placer une signalisation.

21. Dispositif de surveillance routière selon l'une quelconque des revendications précédentes, caractérisé en ce qu'il comporte des moyens pour enclencher automatiquement les clignoteurs du véhicule routier en faisant usage des lignes de marquage.

22. Utilisation d'un dispositif de surveillance routière selon la revendication 18 pour réaliser une ou plusieurs fonctions d'automatisme du véhicule routier à l'aide d'un ou plusieurs ensembles de deux lignes mises en travers de la surface de roulement (S1, S2, S3 des figures 5, 6, 7, 8).

23. Utilisation d'un dispositif de surveillance routière selon la revendication 21 caractérisé en ce que la fonction d'automatisme concerne l'enclenchement automatique des phares du véhicule routier au moyen de deux lignes non parallèles mises en travers de la surface de roulement (S1, S2, 53 de la figure 8).

24. Utilisation d'un dispositif de surveillance routière selon la revendication 21 caractérisé en ce que la fonction d'automatisme concerne le ralentissement automatique du véhicule routier au moyen d'un ou plusieurs ensembles de deux lignes parallèles mises en travers de la surface de roulement, les dites lignes étant de plus en plus rapprochées (S1, S2, de la figure 7).

25. Utilisation d'un dispositif de surveillance routière selon l'une quelconque des revendications 1 à 20 pour surveiller la vitesse, la position du véhicule sur la surface de roulement, un dépassement interdit, un sens unique, l'approche d'un carrefour, d'un signal stop ou d'un virage dangereux.

26. Utilisation du dispositif de surveillance routière selon l'une quelconque des revendications 1 à 20 pour surveiller la présence d'un véhicule dans l'angle mort de la vision d'un conducteur.

**Patentansprüche**

1. Straßenüberwachungsvorrichtung, die in einem Straßenfahrzeug angebracht ist, das in der Lage ist, sich auf einer Fahrbahn fortzubewegen und mindestens einen Sensor (C1, C2) enthält, der auf die besagte Fahrbahn ausgerichtet ist und in der Lage ist, Veränderungen an dieser anvisierten Fahrbahn festzustellen, während sich das Fahrzeug fortbewegt; der Sensor bzw. die Sensoren (C1, C2) umfassen einen oder mehrere Sender, die in der Lage sind, Wellen auszusenden, die unempfindlich für das Umgebungslicht der besagten Fahrbahn sind und einen oder mehrere Empfänger, die ausschließlich die reflektierten Wellen, die von dem oder den entsprechenden Sendern stammen, erfassen, ein Signalsystem (2), das in der Lage ist, diese Fahrbahnveränderungen anzuzeigen und eine elektronische Einheit (1), die in der Lage ist, das Signalsystem (2) anhand der von den besagten Sensoren stammenden Informationen zu steuern, gekennzeichnet durch eine Ausgangseinstellung der Sensibilitätsgrenze der besagten Sensoren, die den Längen der ausgewählten Infrarotwellen Rechnung trägt, was eine Sensibilisierung auf Fremdkörper, wie zum Beispiel Sand, Gras, Schnee- oder Eisplatten, Seitenstreifen, Erdaufschüttungen, Sicherheitsabsperrungen usw. ermöglicht, sowie durch ein Sichtvisier, mit dessen Hilfe der Wirkungsbereich der Sensoren (C1, C2) festgelegt oder gesteigert werden kann.

2. Straßenüberwachungsvorrichtung gemäß Anspruch 1, die dadurch gekennzeichnet ist, daß der oder die Sensoren (C1, C2) eine Sensibilitätsgrenze besitzen, die je nach anvisierter Fahrbahnart und nach der Trennentfernung individuell eingestellt werden kann.

3. Straßenüberwachungsvorrichtung gemäß einem der vohergehenden Ansprüche, die dadurch gekennzeichnet ist, daß das Funktionieren des oder der Sensoren (C1, C2) nicht durch äußere Einflüsse, wie zum Beispiel Tageslicht, Regen oder Nebel gestört wird.

4. Straßenüberwachungsvorrichtung gemäß einem der vorhergehenden Ansprüche, die dadurch gekennzeichnet ist, daß der oder die Sensoren (C1, C2) dazu in der Lage sind, die Entwicklung der anvisierten Fahrbahn sowohl in Richtung der Fortbewegung als auch in Querrichtung zu verfolgen.

5. Straßenüberwachungsvorrichtung gemäß einem der vorhergehenden Ansprüche, die dadurch gekennzeichnet ist, daß sie mindestens einen Reflektorschirm (E) enthält, der dazu in der Lage ist, die von den Sensoren ausgesendeten und reflektierten Wellen zu lenken.

6. Straßenüberwachungsvorrichtung gemäß einem der vorhergehenden Ansprüche, die dadurch gekennzeichnet ist, daß das Signalsystem (2) Meldungen mittels Lichtsignalen, akustischen Meldungen, geschriebenen Meldungen, Stimmeldungen oder Sensormeldungen produziert, deren Emissionsdauer automatisch begrenzt ist.

7. Straßenüberwachungsvorrichtung gemäß einem der vorhergehenden Ansprüche, die dadurch gekennzeichnet ist, daß sie zusätzlich ein Alarmsystem (3) umfaßt.

8. Straßenüberwachungsvorrichtung gemäß Anspruch 7, die dadurch gekennzeichnet ist, daß das Alarmsystem Lichtsignale, geschriebene Signale, Stimmsignale oder Sensorsignale produziert, deren Emissionsdauer automatisch begrenzt ist.

9. Vorrichtung zur Fahrbahnüberwachung gemäß einem der Ansprüche 7 und 8, die dadurch gekennzeichnet ist, daß sie eine vorübergehende aromatische Blockierung des Alarmsystems (3) beinhaltet, die beim Einsc-alten des Blinkers des Straßenfahrzeuges einsetzt.

10. Vorrichtung zur Fahrbahnüberwachung gemäß Anspruch 9, die dadurch gekennzeichnet ist, daß sie ein Unterbrechungsorgan (6) für die vorübergehende automatische Blockierung des Alarmsystems (3) beinhaltet.

11. Straßenüberwachungsvorrichtung gemäß Anspruch 10, die dadurch gekennzeichnet ist, daß das Unterbrechungsorgan (6) mit einem Am-BlokkierSystem (5) ausgestattet ist, welches die Wirkung des Unterbrechungsorgans im Falle einer längeren Blockierung des Unterbrechungsorgans stomt.

12. Straßenüberwachungsvorrichtung gemäß einem der vorhergehenden Ansprüche, die dadurch gekennzeichnet ist, daß sie eine Kontroleinheit (7) umfaßt, die dazu in der Lage ist, das korrekte Funktionieren der Sensoren (C1, C2) zu überwachen.

13. Straßenüberwachungsvorrichtung gemäß einem der vorhergehenden Ansprüche, die dadurch gekennzeichnet ist, daß sie eine Unterbrechungsvorrichtung des Alarmsystems (3) beinhaltet, für der Fall, daß es zu einem längeren Einsatz des oder der Sensoren (C1, C2) kommt.

14. Straßenüberwachungsvorrichtung gemäß einem oder vorhergehenden Ansprüche, die dadurch gekennzeichnet ist, daß sie mindestens einen Sensor (C8) umfaßt, der dazu in der Lage ist, das Vorhandensein von Sicherheitsabsperrungen zu registrieren.

15. Straßenüberwachungsvorrichtung gemäß Anspruch 14, die dadurch gekennzeichnet ist, daß sie mindestens einen Sensor (C10) umfaßt, der dazu in der Lage ist, das Vorhandensein von sich seitlich nähernden Fahrzeugen zu registrieren, so daß er zwischen der Annäherung an ein Fahrzeug und der Annäherung an eine Sicherheitsabsperrung unterscheiden kann.

16. Straßenüberwachungsvorrichtung gemäß einem der vorhergehenden Ansprüche, die dadurch gekennzeichnet ist, daß sie mehrere Sensoren (C1... C13) umfaßt, deren Anbringung und Regulierung der Funktionssensibilität es ermöglichen, Signale, die von den anvisierten Fahrbahnen ausgehen, von jeden einzelnen der Sensoren zu erhalten, wobei diese Signale, wenn sie untereinander kombiniert werden, die gewünschten relevanten Meldungen geben.

17. Straßenüberwachungsvorrichtung gemäß einem der vorhergehenden Ansprüche, die dadurch gekennzeichnet ist, daß sie Möglichkeiten umfaßt, nach Belieben die gestrichelten Linien von den durchgezogenen Linien der längsachsigen Fahrbahnmarkierung zu unterscheiden.

18. Straßenüberwachungsvorrichtung gemäß einem der vorhergehenden Ansprüche, die dadurch gekennzeichnet ist, daß sie Möglichkeiten umfaßt, die Automatikfunktionen in der Lenkvorrichtung des Straßenfahrzeugs einzuschalten.

19. Straßenüberwachungsvorrichtung gemäß einem der vorhergehenden Ansprüche, die dadurch gekennzeichnet ist, daß die Außenrückspiegel des Straßenfahrzeuges dazu genutzt werden, um dort einen oder mehrere Sensoren (C1... C13) anzubringen.

20. Straßenüberwachungsvorrichtung gemäß einem der vorhergehenden Ansprüche, die dadurch gekennzeichnet ist, daß die Außenrückspiegel des Straßenfahrzeuges dazu genutzt werden, um dort eine Signalvorrichtung anzubringen.

21. Straßenüberwachungsvorrichtung gemäß einem der vorhergehenden Ansprüche, die dadurch gekennzeichnet ist, daß sie Möglichkeiten umfaßt, um die Blinker des Straßenfahrzeuges unter Zuhilfenahme der Markierungslinien automatisch einzuschalten.

22. Straßenüberwachungsvorrichtung gemäß Anspruch 18, um eine oder mehrere der Automatikfunktionen des Straßenfahrzeuges zu realisieren, und zwar unter Zuhilfenahme eines oder mehrerer Querlinienpaare der Fahrbahn (S1, S2, S3 der Abbildungen 5, 6, 7, 8).

23. Verwendung einer Straßenüberwachungsvorrichtung gemäß Anspruch 21, die dadurch gekennzeichnet ist, daß die Automatikfunktion das automatische Einschalten der Scheinwerfer des Straßenfahrzeuges mittels zweier nicht paralleler Querlinien auf der Fahrbahn (S1, S2, S3 der Abbildung 8) betrifft.

24. Verwendung einer Straßenüberwachungsvorrichtung gemäß Anspruch 21, die dadurch gekennzeichnet ist, daß die Automatikfunktion die automatische Verlangsamung des Straßenfahrzeuges mittels eines oder mehrerer Querlinienpaare auf der Fahrbahn, betrifft, wobei die besagten Linien immer näher beieinander liegen (S1, S2 der Abbildung 7).

25. Verwendung einer Straßenüberwachungsvorrichtung gemäß einem der Ansprüche 1 bis 20, um die Geschwindigkeit, die Position des Fahrzeuges auf der Fahrbahn, ein unerlaubtes Überschreiten, eine Einbahnstraße, das Herannahen einer Kreuzung, eines Stoppschildes oder einer gefährlichen Kurve zu überwachen.

26. Verwendung einer Straßenüberwachungsvorrichtung gemäß einem der Ansprüche 1 bis 20, um das Vorhandensein eines Fahrzeuges im toten Winkel des Sichffeldes eines Fahrers zu überwachen.

**Claims**

1. Road monitoring device on board a road vehicle capable of moving on a driving surface, comprising at least one sensor (C1, C2) facing said driving surface capable of detecting changes on the surface scanned while the vehicle is in motion, the sensor or sensors (C1, C2) comprising one or more transmitters capable of transmitting waves not affected by ambient light towards said surface and one or more receivers capturing exclusively reflected waves emanating from the or corresponding transmitter or transmitters, a signalling system (2) capable of indicating these surface changes and an electronic unit (1) capable of operating the signalling system (2) using the information coming from said sensors, characterized by an initial adjustment of said sensors' sensitivity threshold taking account of the wave lengths chosen in the infrared range allowing for sensitivity to foreign objects such as sand, grass, snow or ice layers, hard shoulders, centre strips, guard rails, etc... as well as by a telescopic sight making it possible to define or increase the sensors (C1, C2) useful field.

2. Road monitoring device as claimed in claim 1 wherein the sensor(s) (C1, C2) possess a sensitivity threshold individually adjustable to the nature of the surface scanned and to the intervening distance.

3. Road monitoring device in accordance with anyone of the previous claims whereby the working of one or both sensors (C1, C2) is not disturbed by external ambient conditions such as daylight, rain, fog.

4. Road monitoring device as claimed in wathever previous claims whereby the sensor or sensors (C1, C2) are capable of following the changes in the surface scanned both along and across the line of the vehicle's path.

5. Road monitoring device as claimed in whatever previous claims whereby said device comprises at least one reflector (E) capable of orienting the sensors'emitted and reflected waves.

6. Road monitoring device as claimed in whatever previous claims whereby the signalling system (2) issues messages by means of luminous signals, by sound messages, by written messages, by vocal messages or by sensory messages the emission period of which is automatically limited.

7. Road monitoring device as claimed in whatever previous claims further comprising an alarm system 3.

8. Road monitoring device as claimed in claim 7 whereby the alarm system issues liminous signals, written signals, vocal signals or sensory signals the emission period of which is automatically limited.

9. Road monitoring device as claimed in whatever claims 7 and 8 whereby said device comprises an automatic temporary locking device for the alarm system (3) as soon as the road vehicle turn signal switched on.

10. Road monitoring system as claimed in claim 9, whereby the said device comprises a cut off means (6) for the temporary automatic locking device of the alarm system (3).

11. Road monitoring system as claimed in claim 10, whereby the cut off means (6) is fitted with an antijamming system (5) stopping the action of the cut off whenever the latter is jammed for a long time.

12. Road monitoring device as claimed in whatever previous claim whereby said device comprises a checking unit (7) capable of monitoring the correct functioning of sensors (C1, C2).

13. Road monitoring device as claimed in whatever previous claim whereby said device comprises an alarm system cut off device (3) when there is a prolonged action of one or both sensors (C1, C2).

14. Road monitoring device as claimed in whatever previous claims whereby said device comprises at least one sensor (C8) capable of detecting the presence of guard rails.

15. Road monitoring device as in claim 14 whereby said device comprises one sensor (C10) capable of detecting the presence of vehicles approaching laterally in order to make the distinction between the approach of a vehicle and that of guard rails.

16. Road monitoring device as claimed in whatever previous claims whereby the device comprises several sensors (C1...C13) the location and adjustement of working sensitivity of which make it possible to obtain signals from surfaces scanned by each one of them, signals that when combined with each other provided the desirable relevant messages.

17. Road monitoring device as claimed in whatever previous claims whereby said device comprises means to distinguish at will the broken lines from the continuous lines of the road's longitudinal marking.

18. Road monitoring device as claimed in whatever previous claims whereby said device comprises means to activate automatic functions when a road vehicle is being driven.

19. Road monitoring device as claimed in whatever previous claims whereby the road vehicle's external rearview mirrors are used to locate on them one or more sensors (C1....C13).

20. Road monitoring device as claimed in whatever previous claims whereby the road vehicle's external rearview mirrors are used to locate on them a means of signalling.

21. Road monitoring device as claimed in whatever previous claims whereby said device comprises means to activate automatically the vehicle's turn signals by using marking use of the road markings.

22. Utilization of a road monitoring device as in claim 18 to trigger one or more automatic functions of the road vehicle by means of one or several sets of double lines arranged across the driving surface (S1, S2, S3 in figures 5, 6, 7, 8).

**23.** Utilization of a road monitoring device as in claim 21 whereby the automatic function concerns the automatic switching on of the road vehicle's headlights by means of two non parallel lines across the driving surface (S1, S2, S3 in figure 8).

**24.** Utilization of a road monitoring device as in claim 21 whereby the automatic function concerns slowing down the road vehicle automatically by means of one or several sets of two parallel lines across the driving surface, said lines being ever nearer to each other (S1, S2, in figure 7).

**25.** Utilization of a road monitoring device as claimed in any one of the claims 1 to 20 to check speed, vehicle position on the driving surface, no overtaking, no entry for vehicular traffic, approach of a cross road, stop sign or hazard turn.

**26.** Utilization of a road monitoring device as claimed in any one of the claims 1 to 20 to check the presence of a vehicle in the blind area of the driver's vision.

Figure 1

Figure 2

Figure 3

Figure 4

Figure 5

Figure 6

Figure 7

# Figure 8

# Figure 9

# Figure 10